# EUROPEAN PATENT APPLICATION

(11) **EP 2 674 859 A2**
(43) Date of publication of application: **18.12.2013**
(21) Application number: 13171474.3
(22) Date of filing: 11.06.2013
(51) Int. Cl.: G06F 9/44

(54) **Computing system, method for controlling thereof, and computer-readable recording medium having computer program for controlling thereof**

(30) Priority: 13.06.2012 JP 2012133452
(71) Applicant: CASIO COMPUTER CO., LTD., Shibuya-ku, Tokyo 151-8543 (JP)
(72) Inventor: Sonoyama, Yuji, Hamura-shi, Tokyo 205-8555 (JP); Nishitani, Koji, Hamura-shi, Tokyo 205-8555 (JP); Takahashi, Hiroshi, Hamura-shi, Tokyo 205-8555 (JP)
(74) Representative: Grünecker, Kinkeldey, Stockmair & Schwanhäusser

(57) **Abstract**

The present invention includes: a pointing object for constructing and managing pointing information, wherein the pointing information points one or more of executable objects, each of which provides a unique output by performing a unique operation, an informative object for constructing and managing reference information, wherein the reference information serves as a reference in using one or more of executable objects to deal with a request of the user, a procedural object for selecting one or more of the executable objects to be executed based on the reference information, and constructing and managing an execution sequence related to execution order of the selected one or more of the executable objects, and an execution control object for executing at least a part of each of the selected executable object according to the execution sequence and providing output of the executable object produced as a result of the execution to a designated recipient selected from a group comprised of the user and at least one third party selected by analyzing the user's request.

## Description

### CROSS-REFERENCE TO RELATED APPLICATIONS

This application is based upon and claims the benefit of priority under 35 USC 119 of Japanese Patent Application No. 2012-133452 filed on June 13, 2012, the entire disclosure of which, including the description, claims, drawings, and abstract, is incorporated herein by reference in its entirety.

### BACKGROUND OF THE INVENTION

### 1. Field of the Invention

The present invention relates to a computing system, a method for controlling thereof, and a computer-readable recording medium having a computer program for controlling thereof. Particularly, the present invention relates to a computing system for selecting and designating one or more executable objects that can be executed by the computing system based on a user's command in accordance with predetermined criteria, controlling execution of the executable objects, and providing a result which satisfies a unique intention of the user in a timely and customized manner, a method for controlling thereof, and a recording medium in which a control program for controlling thereof is recorded.

### 2. Description of the Related Art

In general, a computing system executes calculation and/or logical operations in accordance with a predetermined sequence (management processing), stores and/or moves various information (information processing), and controls a hardware device connected thereto or a software installed therein (control processing). The computing system includes: a hardware such as a central processing unit (CPU), a memory, an input/output device, a bus, or the like; and a software such as a basic input output system (BIOS), an operating system (OS), or the like. This computing system may include a relatively new device such as a tablet PC or a smart phone as well as a conventional computer such as a main frame, a mini computer, a workstation or a personal computer. In other word, it should be understood that the computing system to which the technical idea of the present invention is applied is not particularly limited in its type or inner architecture and any device capable of executing a part or all of the management processing, the information processing and the control processing is included in the computing system of the present invention.

In general, in controlling a computing system, a user operates his own computing system in accordance with an algorithm that has been designed by a third person ("existing algorithm") in order to deal with his own needs. However, when the computing system is controlled by the existing algorithm, there has been a problem that only a part of of some users is satisfied because it is not possible to sufficiently deal with the users' unique environments, situations, or job characteristics.

As one of the solutions to the above problem, a user may develop a dedicated algorithm that has been designed in a customized manner in accordance with his unique environment, situations or job characteristics and operate his own computing system using the dedicated algorithm. However, the development of the dedicated algorithm requires considerable time and costs. Further, the developed dedicated algorithm may not completely satisfy the original needs. Sometimes, even if the original needs are sufficiently satisfied, such dedicated algorithm still cannot deal with new needs occurring due to changes in the user's circumstances (for example, U.S. Patent Publication No. 6,901,417 and U.S. Patent Publication No. 7,657,870).

### SUMMARY OF THE INVENTION

In view of the above, an object of the present invention is to provide a computing system designed and operating so as to deal with various needs of various users in accordance with different characteristics such as unique environments, situations or jobs of the users in a timely and customized manner, a method for controlling thereof, and a recording medium in which a program for controlling thereof is recorded.

According to a first aspect of the invention, there is provided a computing system comprising a hardware which comprises a central processing unit and a memory and a software which comprises a basic input/output system and an operation system, for executing one or more of processes for performing a task required by a user, comprising: a pointing object for constructing and managing pointing information, wherein said pointing information points one or more of executable objects, each of which provides a unique output by performing a unique operation; an informative object for constructing and managing reference information, wherein said reference information serves as a reference in using one or more of executable objects to deal with a request of said user; a procedural object for selecting one or more of said executable objects to be executed based on said reference information, and constructing and managing an execution sequence related to execution order of said selected one or more of said executable objects; and an execution control object for executing at least a part of each of said selected executable object according to said execution sequence and providing output of said executable objects produced as a result of said execution to a designated recipient selected from a group comprised of said user and at least one third party selected by analyzing said user's request.

According to a second aspect of the invention, there is provided a method for controlling execution of a computing system, said computing system comprising a hardware which comprises a central processing unit and a memory and a software which comprises a basic input/output system and an operation system, for executing one or more of processes for performing a task required by a user, comprising: an information registration process for constructing and managing reference information, wherein said reference information serves as a reference in using one or more of executable objects to deal with a request of said user, each of said executable objects provides a unique output by performing a unique operation; a pointing object management process for constructing and managing pointing information, wherein said pointing information points one or more of executable objects; a task sequence management process for selecting one or more of said executable objects to be executed based on said reference information, and constructing and managing an execution sequence related to execution order of said selected one or more of said executable objects; and a task execution process for executing at least a part of each of said selected executable object according to said execution sequence and providing output of said executable objects produced as a result of said execution to a designated recipient selected from a group comprised of said user and at least one third party selected by analyzing said user's request.

According to a third aspect of the invention, there is provided a recording medium for recording an execution control program of a computing system for performing one or more processes for executing a task required by a user, said computing system comprising a hardware which comprises a central processing unit and a memory and a software which comprises a basic input/output system and an operation system, wherein said execution control program controls said computing system to perform processes comprising: an information registration process for constructing and managing reference information, wherein said reference information serves as a reference in using one or more of executable objects to deal with a request of said user, each of said executable objects provides a unique output by performing a unique operation; a pointing object management process for constructing and managing pointing information, wherein said pointing information points one or more of executable objects; a task sequence management process for selecting one or more of said executable objects to be executed based on said reference information, and constructing and managing an execution sequence related to execution order of said selected one or more of said executable objects; and a task execution process for executing at least a part of each of said selected executable object according to said execution sequence and providing output of said executable objects produced as a result of said execution to a designated recipient selected from a group comprised of said user and at least one third party selected by analyzing said user's request.

### BRIEF DESCRIPTION OF THE DRAWINGS

The present invention will more sufficiently be understood by the following detailed description and the accompanying drawings, which are, however, exclusively for explanation and do not limit the scope of the present invention.

Here:
Fig. 1 is a schematic diagram showing the structure of a computing system according to an embodiment of the present invention;
Fig. 2 is a schematic diagram showing processes performed by a method for controlling execution of the computing system according to an embodiment of the present invention;
Fig. 3 is a schematic diagram showing an information registration process performed by the method for controlling execution of the computing system according to an embodiment of the present invention.
Fig. 4 is a schematic diagram showing a pointing object management process performed by the method for controlling execution of the computing system according to an embodiment of the present invention.
Fig. 5 is a schematic diagram showing a user command analysis process in a task sequence management process performed by the method for controlling execution of the computing system according to an embodiment of the present invention.
Fig. 6 is a schematic diagram showing a user request understanding process in the task sequence management process performed by the method for controlling execution of the computing system according to an embodiment of the present invention.
Fig. 7 is a schematic diagram showing a task sequence building process in the task sequence management process performed by the method for controlling execution of the computing system according to an embodiment of the present invention.
Fig. 8 is a schematic diagram showing an executable object designation process in the task sequence management process performed by the method for controlling execution of the computing system according to an embodiment of the present invention.
Fig. 9 is a schematic diagram showing an executable object specification management process in a task execution process performed by the method for controlling execution of the computing system according to an embodiment of the present invention.
Fig. 10 is a schematic diagram showing an executable object input/output correspondence and/or conversion process in the task execution process performed by the method for controlling execution of the computing system according to an embodiment of the present invention.
Fig. 11 is a schematic diagram showing an executable object execution process in the task execution process performed by the method for controlling execution of the computing system according to an embodiment of the present invention.
Fig. 12 is a schematic diagram showing processes performed by a method for controlling execution of a computing system according to another embodiment of the present invention.
Fig. 13 is a schematic diagram showing a decision tree activation process in a task sequence management process performed by the method for controlling execution of the computing system according to another embodiment of the present invention.
Fig. 14 is a schematic diagram showing a user property referencing process in the task sequence management process performed by the method for controlling execution of the computing system according to another embodiment of the present invention.
Fig. 15 is a schematic diagram showing a task sequence building process in the task sequence management process performed by the method for controlling execution of the computing system according to another embodiment of the present invention.
Fig. 16 is a schematic diagram showing an executable object link process in a task execution process performed by the method for controlling execution of the computing system according to another embodiment of the present invention.
Fig. 17 is a schematic diagram showing an output building and/or providing process in the task execution process performed by the method for controlling execution of the computing system according to another embodiment of the present invention.
Fig. 18 is a schematic diagram showing the structure of a computing system according to still another embodiment of the present invention.
Fig. 19 is a schematic diagram showing the structure of a computing system according to still another embodiment of the present invention.

### DETAILED DESCRIPTION OF THE PREFERRED EMBODIMENT

Hereinafter, embodiments of the present invention will be described in detail with reference to the accompanying drawings. The technical scope of the present invention is not limited to the embodiments illustrated in the accompanying drawings.

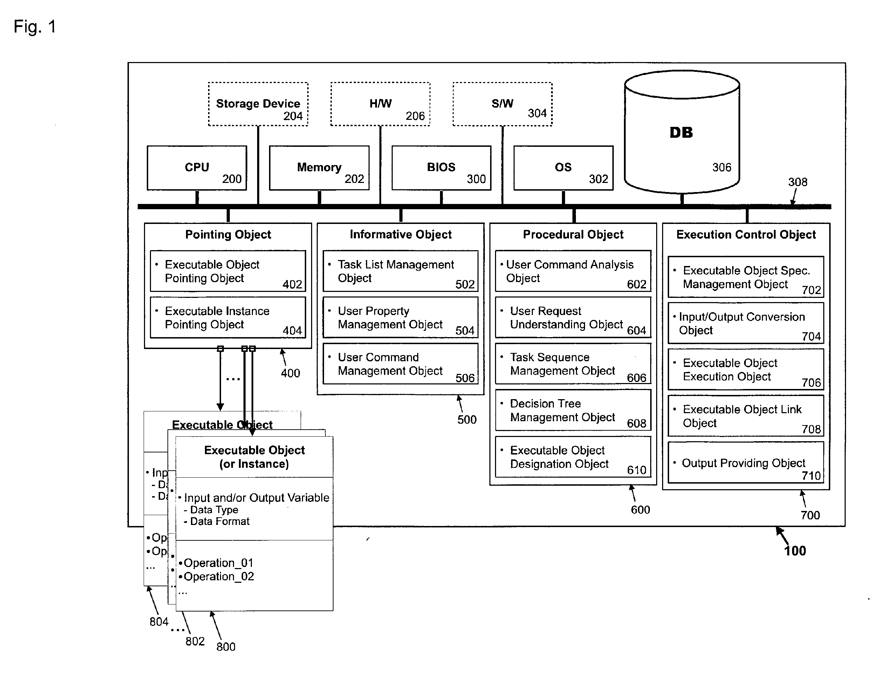

Fig. 1 is a schematic diagram showing the structure of a computing system 100 according to an embodiment of the present invention. As shown in Fig. 1, the computing system 100 of an embodiment of the present invention includes: a central processing unit (CPU) 200; a memory 202 such as a PAM, a ROM or the like (not shown); a storage device 204 such as a hard disk, a CD-ROM or the like (not shown) for storing data, file or the like; and various hardwares (H/W) 206 such as a LAN adaptor, a USB adaptor, a monitor or the like (not shown). The computing system 100 of the present invention further includes a basic input/output system (BIOS) 300, an operating system (OS) 302, a software(S/W) 304 such as various drivers or libraries, and a database (DB) 306 for correlating and managing various data and information. The BIOS 300 may be implemented in a ROM or a flash memory (not shown) in a read only manner or a read/write manner. The OS 302 or other softwares including the software 304 may be implemented in a proper hardware in a read only manner or a read/write manner according to sizes and uses thereof. These components may be connected to one another by a bus 308 so as to exchange necessary information among them.

Particularly, the computing system 100 of the present invention further includes: a pointing object 400 for pointing at least one of executable objects 800, 802 and 804 each of which provides an output(s) of the unique number and format by executing a unique operation; an informative object 500 for constructing and managing various reference information, the reference information serving as a reference for selecting one or more of the executable objects 800, 802 and 804, which are necessary to deal with a user's request, or a reference for constructing an execution sequence of the selected executable objects; a procedural object 600 for selecting necessary one or more of the executable objects 800, 802 and 804 to be executed based on the reference information, and constructing and managing an execution sequence of the selected executable objects; and an execution control object 700 for providing a predetermined output(s) of the executable objects to the user or a third party selected by analyzing the user's request (collectively referred to as "designated recipient") by executing a part or all of each of the selected ones of the executable objects 800, 802 and 804 in accordance with the execution sequence managed by the procedural object 600 or by executing a part of or all customized instances thereof.

Similarly to the BIOS 300 or the like, the objects may be implemented in a proper hardware such as a ROM, a flash memory, a hard disk, a CD-ROM, various servers or the like (not shown) in a read only manner or a read/write manner in accordance with sizes and uses thereof. A single or a plurality of objects may be implemented according to a designer's needs. Although Fig. 1 shows an embodiment in which the objects are implemented separately from a hardware or a software, they may be implemented as a part of the OS 302 in accordance with the designer's needs, or may be implemented as an application program operating on the OS 302, or may also be implemented as a so-called middleware between the OS 302 and the application program. In other words, those skilled in the art to which the present invention pertains can easily understand that the objects of the present invention may be implemented in any type.

Each of the executable objects 800, 802 and 804 generates an output(s) of the unique number and format by executing a predetermined operation according to one or more individual or interworking algorithms. Although it is general that each of the executable objects 800, 802 and 804 receives an input(s) of the unique number and format, any input may not be required according to a designer's selection. (For example, a random number generation object generates random numbers at predetermined intervals and provides the generated random numbers to a predetermined storage device (e.g., buffer). When new random numbers are generated by the random number generation object, the previously stored random numbers are deleted to store the new random numbers, or, the previously stored random numbers except a predetermined number of relatively newly stored random numbers are deleted to store the new random numbers, The user accesses at any time the buffer and reads the stored random numbers. Therefore, even if no input is provided to the random number generation object, a random number can be obtained. In the above example, the random number may have a predetermined format, e.g., an integer or a floating point number. One or a plurality of random numbers can be output, if necessary. Another example of the executable object for generating an output without any input is an oscillator object for generating a signal at a predetermined interval.) The executable objects 800, 802 or 804 may be implemented as various softwares or a part thereof, such as Application, Web Service, Widget, Plug-in and the like. Further, each of the executable objects 800, 802 and 804 may be stored in, e.g., the memory 202 or the storage device 204 in the computing system 100 of the present invention or in a separate device such as an external server (not shown) according to a designer's selection.

When any of the executable objects 800, 802 and 804 is stored in the computing system 100 of the present invention, it may be called, if necessary, based on location information specified as a specific folder of a specific directory of the hard disk (not shown) of the computing system 100. When any of the executable objects 800, 802 and 804 is stored outside the computing system 100 of the present invention, it may be called based on location information, e.g., URL (Uniform Resource Locator) or the like, if necessary,. In accordance with another embodiment of the present invention, the computing system 100 may generate instances ("executable instances") by customizing (instantiating) a part of or all the input data, the output data and the execution operation of one or more executable objects 800, 802 and 804, if necessary, and use the instances instead of the original executable objects. In this specification, the term "executable objects" has a wide meaning that includes the executable instances unless both terms need to be distinguished exceptionally.

The pointing object 400 constructs and manages pointing information for pointing a part or all of the executable objects 800, 802 and 804. For example, the pointing object 400 registers information about the locations in which the executable objects 800, 802 and 804 are stored and manages changes in the information. When URL information of the executable objects 800, 802 or 804 is changed, the pointing object 400 changes related information to a new URL address. Similarly, when the executable object stored in the computing system 100 of the present invention is moved to another location (e.g., another directory or another folder) or moved outside the computing system 100 to have an external URL, not a locator of an internal directory, the pointing object 400 tracks and renews pointing information and manages future changes thereof.

The pointing object 400 includes: an executable object pointing object 402 for constructing and managing pointing information which points the executable object 800, 802 or 804; and an executable instance pointing object 404 for constructing and managing pointing information which points a part of or all the executable instances of the executable objects 800, 802 or 804. In other words, the executable object pointing object 402 registers information about the storage location such as the directory information or the URL address of the executable objects 800, 802 or 804, and renews the information when the information has changed. If any of the executable object 800, 802 and 804 is deleted or becomes invalid (e.g., if the existing executable object cannot be executed due to upgrade of the OS 302, or the like), the pointing information may be deleted, or a notification that update of the executable object is required may displayed. When the update version of the executable object is provided, the location information may be changed to that of the update version. Meanwhile, the executable instance pointing object 404 registers and manages the information about the storage location, such as the directory information or the URL address of the executable instance of the executable objects 800, 802 or 804. The renewal, the deletion or the like of the pointing information is carried out as described above.

The informative object 500 constructs and manages as information serving as a reference in using the executable objects 800, 802 or 804 to deal with a request of the user, information serving as a reference for selecting one or more required executable objects and information serving as a reference for constructing an execution sequence including execution order or timing of the selected executable objects (collectively referred to as "reference information"). This reference information includes: a task list including unit user requests and one or more tasks capable of satisfying each of the unit user requests; a user property list including information on various properties of each of users and weight of each of the properties; and user command information including one or more commands or messages received from the users. Various reference information such as those described above may be constructed before the user's request is processed, or in real time during the execution of the processing.

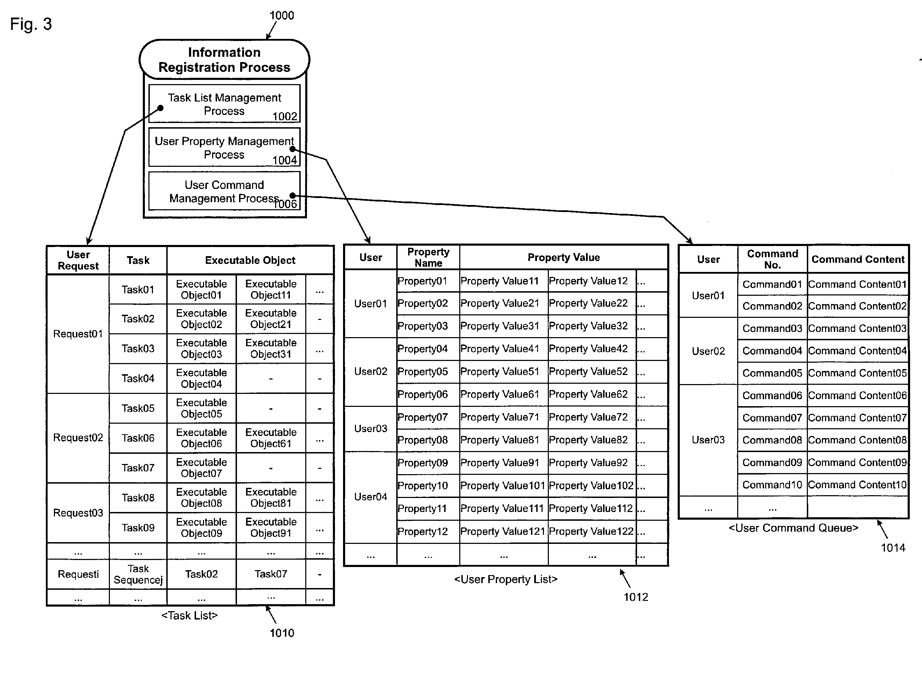

The reference information may be renewed, supplemented or deleted in advance or in real time at regular intervals or at irregularly. As illustrated, the informative object 500 includes: a task list management object 502 for constructing and managing the task list regularly or irregularly; a user property management object 504 for constructing and managing the user property list regularly or irregularly; and a user command management object 506 for constructing and managing user command queue in response to reception of one or more commands or messages from the user. The task list, the user property list and the user command queue will be described later in detail with reference to Fig. 3.

The procedural object 600 understands a request of the user by analyzing a user command received from a user of the computing system 100 of the present invention via a mobile phone message, input of a command string, input of a command icon, input of a voice command or the like, and selects one or more tasks that are jobs to be performed to satisfy the understood request. Further, the procedural object 600 constructs and manages a task sequence for designating execution order or timing of the selected one or more tasks, and designates one or more executable objects required for executing each of the tasks. For example, when interpreting a request of the user by analyzing the user command, the procedural object 600 decomposes the user command into meaningful content elements ("command content elements") through the syntax analysis of the user command. Further, the procedural object 600 can understand a request of the user corresponding to each of the command content elements by using various thesaurus database to be described later and construct a sequence of proper tasks to be performed to satisfy the understood request while referring to predetermined reference information managed by the informative object 500. Moreover, the procedural object 600 can designate the executable objects 800, 802 or 804 suitable for performing the tasks.

As shown in Fig. 1, the procedural object 600 includes a user command analysis object 602 for constructing and managing a standard request thesaurus database including one or more standard request thesauruses corresponding to each of one or more standard request elements of a general user request, extracting the command content elements as semantic elements by analyzing the user command, and interpreting the user command by classifying the command content elements extracted by referring to the standard request thesaurus database in association with the standard request elements. In order to understand a request of the user contained in the analyzed user command, the procedural object 600 further includes a user request understanding object 604 for constructing and managing a user request thesaurus database, which includes one or more user request thesauruses in association with each of the standard request elements, and acquiring one or more user requests corresponding to the extracted command content elements by referring to the user request thesaurus database.

The procedural object 600 further includes a task sequence management object 606 for selecting one or more tasks to be performed to satisfy each of the understood user requests by referring to predetermined reference information managed by the informative object 500, and constructing and managing a task sequence for designating execution timing and/or order of the selected tasks. When the task sequence management object 606 selects tasks to be executed to satisfy the understood user requests, it is preferable to refer to the task list managed by the informative object 500. The task sequence management object 606 constructs the task sequence by determining execution timing or execution order of the selected tasks based on each of the user requests.

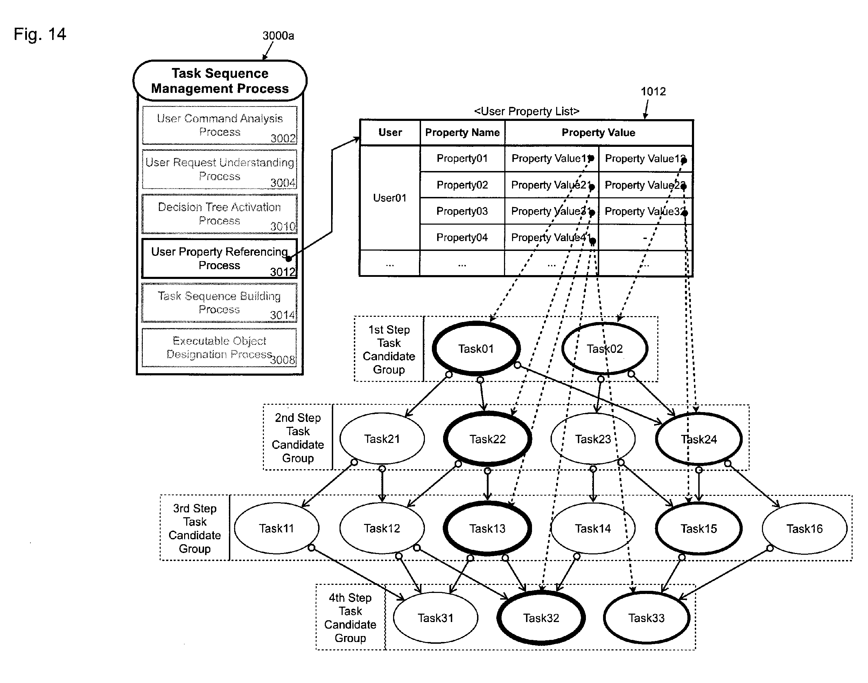

There can be one or a plurality of tasks to be performed to satisfy the understood user request. In case a plurality of tasks correspond to a specific user request, a task suitable for the user can be selected by referring to the user property list, and a task sequence including the selected task can be constructed. A process of selecting an option suitable for the user among a plurality of selectable options by referring to the user property list is here called "user property referencing," and detailed description thereof will be provided with reference to Fig. 14. Meanwhile, according to another embodiment of the present invention, the task sequence management object 606 may construct a plurality of task sequences by arranging a part of or all the tasks. Each of the constructed task sequences is here called "auxiliary task sequence." The task sequence management object 606 may select one or more final task sequences suitable for properties of a specific user by performing the user property referencing for the auxiliary task sequences. As described above, the task sequence can be comprised of the selected tasks suitable for the understood user request. However, according to another embodiment of the present invention, a task sequence including a plurality of tasks corresponding to a specific user request may be input in advance and read when it is determined that the specific user request is input. In this case, the task sequence including a plurality of tasks can be stored in association with the specific user request and read when the specific user request is input. The read task sequence can be selected as a final task sequence.

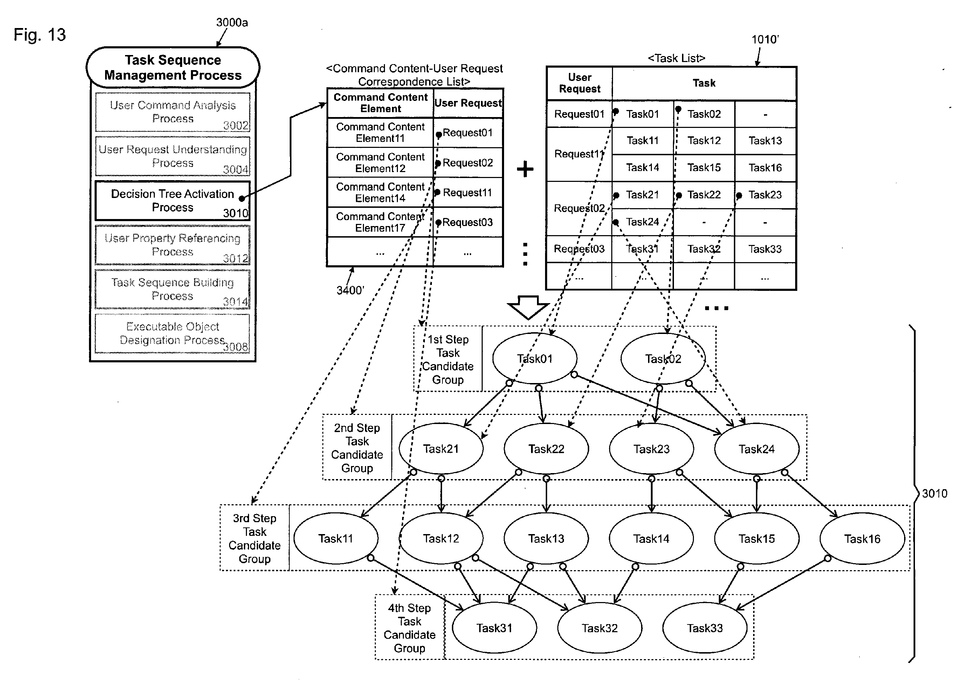

According to another embodiment of the present invention, in order to effectively perform the selection of the tasks and the construction and/or management of the task sequence, the procedural object 600 may further selectively include a decision tree management object 608 for constructing and managing a task decision-tree database. When a plurality of performable tasks correspond to one or more user requests, the decision tree management object 608 arranges candidates of one or more tasks that can be logically combined in a tree structure. At this time, the user property referencing may be added. The construction and management of the task decision tree database will be described later in detail with reference to Fig. 13.

The procedural object 600 further includes an executable object designation object 610 for constructing and managing an executable object sequence by designating an executable object corresponding to each of the tasks belonging to the task sequence which is constructed by the task sequence management object 606, by referring to the reference information managed by the informative object 500. The executable object designation object 610 may refer to the task list in order to designate the executable objects corresponding to the tasks included in the task sequence. According to another embodiment of the present invention, the executable object designation object 610 may search and designate an executable objects required to perform each of the tasks in the internal storage device 204 or an external server (not shown). This may be required to be performed to deal with the case when information about the executable objects corresponding to the specific task does not exist in the existing task list, when information about the executable objects exist in the task list but it is required to check whether the information is valid or not, or the like. In addition, new executable objects may be constantly developed. Therefore, it is preferable that the executable object designation object 610 acquires information on new executable objects and provides the information with the task list management object 502 so that the information can be added to the task list.

Further, there may be a single executable object which can perform each task, or a plurality of executable objects may correspond to one task. In this case, the executable object designation object 610 can designate executable objects suitable for a specific user by the user property referencing. As described above, the procedural object 600 performs processes such as the analysis of the user's request, the selection of the task to be performed corresponding to the analyzed request, the selection of the executable object suitable for performing the selected task, the construction of the execution sequence, and the like, by referring to various reference information managed by the informative object 500, i.e., the user property list in which information about properties of the user and weight of each of the properties are recorded, the task list including a list in which tasks corresponding to the user request and executable objects capable of performing the tasks are recorded, or the like. Accordingly, it is possible to analyze a request of a user, select tasks or executable objects, and construct and manage an execution sequence of the executable objects more suitably for properties unique to the user. Since properties of the user generally change over time, the informative object 500 replaces the variety of reference information with changed values. As a consequence, when the same command of the same user is processed at different timings, the procedural object 600 can correspond to the changes in circumstances of the user by referring to the renewed reference information.

The execution control object 700 executes at least a part of the selected executable objects in accordance with the task sequence or the executable object sequence managed by the procedural object 600 (collectively referred to as "execution sequence") and provides the output to the predetermined recipient. In other words, the execution control object 700 provides an input(s) for a part of or all the selected executable objects 800, 802 and 804 and provides predetermined control data so that a unique operation of the executable objects 800, 802 or 804 can be executed in accordance with the execution sequence. Moreover, the execution control object 700 provides to the designed recipient an output(s) produced as a result of the execution of the unique operation of the executable objects 800, 802 or 804. As described above, the unique operation of the executable object 800, 802 or 804 is executed in accordance with the timing and the order designated in the execution sequence managed by the procedural object 600. Therefore, when a plurality of operations of a single or a plurality of executable objects are executed, the operations may be executed sequentially or in parallel. Upon completion of the execution of the unique operations of the executable objects 800, 802 or 804, the output(s) of the operations are provided to the designated recipient. In this case, the execution control object 700 can convert the type and format of the output data so that they can be suitable for usage environment of each user. During this process, at least a part of the outputs may be divided into a plurality of pieces of information, or a plurality of outputs may be combined into a single or a different number of pieces of information.

The execution control object 700 may include an executable object specification management object 702 for constructing and managing an executable object specification database for a part of or all the executable objects 800, 802 and 804, as illustrated in Fig. 1. The executable object specification database includes the number of the input data of each of the executable objects 800, 802 and 804, the type and format of each of the input data, the number of the output data, the type and format of each of the output data, execution information of each the execution operations, or the like. Further, in order to provide the input(s) required to execute each of the executable objects 800, 802 and 804 of the number, the type and the format suitable for the executable object, the execution control object 700 further includes an input/output conversion object 704 for converting information extracted from the user command or any of the type, the format, and the number of the input(s) and/or the output(s) of each of the executable objects by referring to the executable object specification database. For example, the input/output conversion object 704 can obtain input data required for an executable object to be executed first from command content elements extracted by analyzing the user command, and convert the input data into input(s) of the format, the type and the number required by the executable object to be executed first by referring to the executable object specification database. In order to provide the output produced as a result of the execution of a unique operation of the first executable object as an input of an executable object to be executed next, the input/output conversion object 704 can convert the output of the first executable object into input(s) of the format, the type and the number required by the next executable object by referring to the executable object specification database. Similarly, the output of the final executable object can be converted to output(s) of the predetermined number, the type and the format and then provided to the designated recipient.

In order to execute each of the executable objects 800, 802 and 804 in accordance with the execution sequence, the execution control object 700 further includes an executable object execution object 706 for generating predetermined control information and executing the designated executable objects. The executable object execution object 706 extracts information about the number of unique operations of the executable object to be executed now and information on an execution command for executing each of the operations and its type by referring to the executable object specification database, and generates control information suitable for the executable object based on the information. The executable object execution object 706 provides the control information to the executable objects sequentially or in parallel so that the unique operations of the executable objects can be executed.

According to another embodiment of the present invention, when it is not proper to execute the executable objects selected in accordance with the request of the user command or it is desirable to modify the executable objects, the execution control object 700 may generate customized instances thereof and execute the executable instances instead. The executable instances refer to modifications of at least a part of the number, the type and the format of the input data, the number, the type and the format of the output data of, and the unique operations of the executable object. The execution and handling of the executable instances are the same as those of the executable objects except that the input/output specification (standard) or the unique operations are changed. Therefore, the description on the executable objects can be applied to the executable instances. Accordingly, as described above, it should be noted that the term "executable object" indicates both the executable object and the executable instance except when otherwise mentioned in this specification.

According to another embodiment of the present invention, the execution control object 700 may further include an executable object link object 708 for constructing and managing database such as sharing relation information that an input or an output is shared between the executable objects or correspondence relation information about mutual correspondence relation for a specific input or a specific output. For example, the executable object link object 708 stores the correspondence relation information including the information that a first data output or stored by a first executable object corresponds to a second data output or stored by a second executable object. By this, when a third executable object requires the first data of the first executable object and the second data of the second executable object later, fast and effective processing is possible. The executable object link object 708 will be described in detail with reference to Fig. 13.

According to still another embodiment of the present invention, the execution control object 400 may further include an output providing object 710 for combining outputs produced by the unique operations and providing the combined output to the designated recipient upon completion of the execution of the unique operations of the executable objects in accordance with the execution sequence. For example, the output providing object 710 can combine the outputs of one or more executable objects executed lastly in accordance with the execution sequence and the output of one or more executable objects previously executed and make the combined output to have the type and the format suitable for the designated recipient to provide it with the designated recipient. In this case, the output providing object 710 may receive converted versions of the outputs of the executable objects from the input/output conversion object 704 and combine and/or convert the outputs before providing them with the designated recipient.

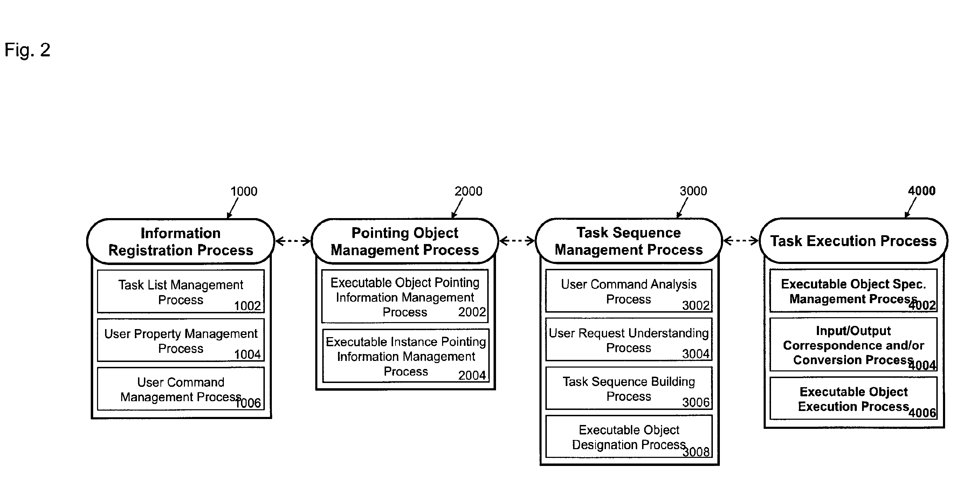

An embodiment of a method for controlling execution of the computing system 100 of the present invention will be described in detail with reference to Fig. 2. Fig. 2 is a schematic diagram showing processes performed by a method for controlling execution of the computing system according to an embodiment of the present invention. As illustrated, the method for controlling execution of the computing system 100 of the present invention includes: an information registration process 1000 for constructing and managing the reference information which serves as a reference in selecting the executable objects 800, 802 or 804, and constructing the execution sequence of the selected executable objects; a pointing object management process 2000 for generating and managing a pointing object for pointing at least one of the executable objects 800, 802 and 804; a task sequence management process 3000 for analyzing the user command to understand the user's request based on the reference information, selecting an executable object(s) to be executed to deal with the request, and constructing and managing an execution sequence of the executable object(s); and a task execution process 4000 for providing a predetermined output(s) of the executable object(s) by executing a part of or all the executable objects 800, 802 and 804 in accordance with the execution sequence or a part of or all the customized instances thereof. As shown, each of the processes 1000 to 4000 includes predetermined sub-processes, and may exchange data among them, if necessary. Hereinafter, the processes 1000 to 4000 will be described in detail with reference to Figs. 3 to 11.

Fig. 3 is a schematic diagram showing an information registration process performed by the method for controlling execution of the computing system according to the embodiment of the present invention. As shown, the information registration process 1000 includes, as sub-processes: a task list management process 1002 for constructing and managing a task list 1010 including unit user requests and one or more tasks capable of satisfying each of the unit user requests; a user property management process 1004 for constructing and managing a user property list 1012 in which information of various properties of users and weights of the properties are recorded; and a user command management process 1006 for constructing and managing user command queue 1014 in which, for each of the users, one or more user commands that are commands or messages received from the user are stored.

As shown in the figure, in the task list management process 1002, a task list is constructed and managed, in which one or more tasks are recorded for each of one more user requests. Each of the tasks corresponds to a job for satisfying the user request. Each of the user requests may be registered in the task list 1010 by a system designer's registering user requests which are expected to be requested in common by users of the computing system 100 of the present invention through the task list management object 502 beforehand, or by each user's registering user requests which currently exist or expected to be requested. To this end, the task list management object 502 may provide a user interface capable of registering the user requests and the tasks corresponding to the user requests in the task list 1010.

According to another embodiment of the present invention, when a user request that has not been registered in the task list 1010 is found among user requests understood from the user command by the procedural object 600, the information about the user request is provided to the task list management object 502 so that the user request can be newly registered in the task list 1010. Similarly, one or more tasks corresponding to each of the user requests are also registered in the task list 1010 by the designer or the users. In the task list management process 1002, a new user request and/or a new task may be registered in the task list 1010 at any time or regularly, or a user request and/or a task that is invalid or unnecessary may be removed from the task list 1010. As described above, a task sequence corresponding to a specific user request may be registered in the task list 1010. In other words, the task list 1010 includes a task sequence j having task 02 and task 07 for a request i. To this end, the task sequence management object 606 may provide a user interface necessary to input or modify the task sequence.

Further, the task list management process 1002 further includes a step of registering in the task list 1010 information about one or more executable objects capable of executing each of the tasks. The information about executable objects corresponding to each task may be collected by the designer and/or the user, and registered in the task list 1010. Moreover, it can be checked regularly or irregularly whether there exists an executable object which is not registered in the task list 1010 yet and information about an executable object which is decided not to have been registered in the task list 1010 can be registered in the task list 1010. The information on the executable objects registered in the task list 1010 may be names serial numbers of the executable objects or the like, or may also be names serial numbers or the like of the pointing objects for pointing the executable objects. The task list management process 1002 may further include a step of removing information on executable objects that are invalid or unnecessary from the task list 1010.

The information registration process 1000 further includes a user property management process 1004 for constructing and managing a user property list 1012 in which information on various properties and weights of the properties for each of the users are recorded. In the user property management process 1004, the user of the computing system 100 of the present invention or a potential user who may become a user (e.g., a third party designated to receive the output data from the user; hereinafter, the user and the potential user will be collectively referred to as "user") is registered in the user property list 1012. Then, the user property information is recorded in associated with the user. The user property information recorded in the user property list 1012 includes the name of the property (property name) and the value of the property (property value). There may be a plurality of pieces of property information for each user. The property has only one property name but may have a plurality of property values. When a plurality of options exist in performing the task sequence management process 3000 and/or the task sequence execution process 4000, the user property list 1012 constructed as described above is used to select an option suitable for each user among the options. Further, the data of the user property list 1012 may be renewed, added or deleted by the user property management object 504 regularly or irregularly.

The information registration process 1000 further includes a user command management process 1006 for constructing and managing user command queue 1014 which stores, for each of the users, user commands received from the user. In the user command queue 1014, a command number (command No.) and command content of the commands are recorded for each user. In the user command queue 1014, the user commands may be classified by users and recorded for each user as shown in Fig. 3, or may also be recorded in the order of input. A command which has already been processed or becomes invalid may be dealt with in various manners. For example, the processed or invalid command may be deleted from the user command queue 1014, or stored in a cache memory if necessary, or separately stored and used for link with the user property list 1012.

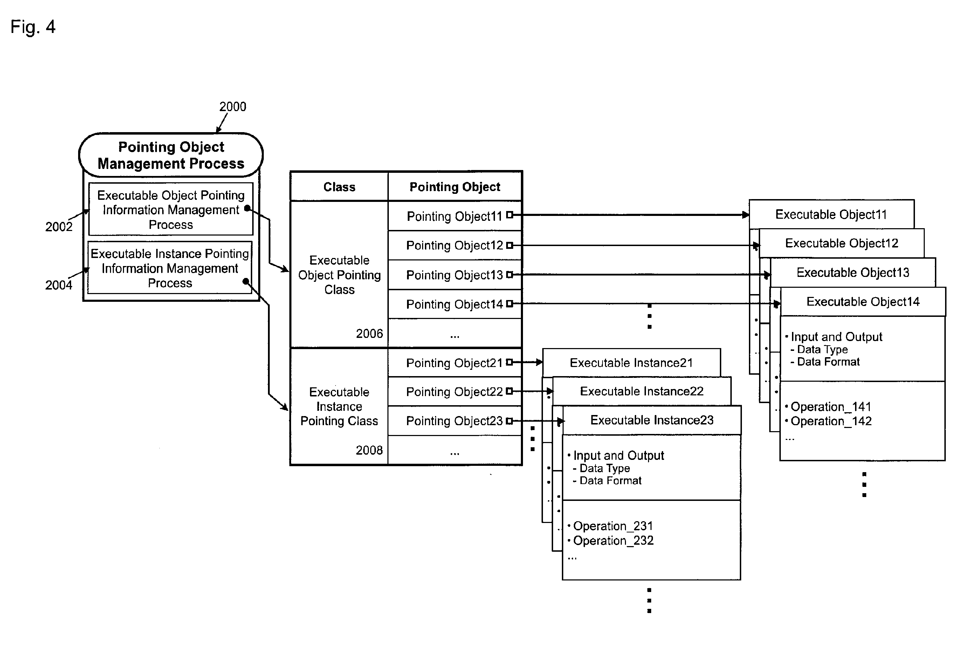

Fig. 4 is a schematic diagram showing a pointing object management process executed by the method for controlling execution of the computing system according to an embodiment of the present invention. As shown, the pointing object management process 2000 includes an executable object pointing information management process 2002 for generating and managing an executable object pointing object which points the executable object. As described above, each of the executable object pointing object 402 constructs and manages the pointing information for pointing an executable object. According to an embodiment of the present invention, each of the executable object pointing objects 402 is generated by inheriting an executable object pointing class in the executable object pointing information management process 2002. The executable object pointing class includes a function, a method or a variable required necessary to generate and manage the pointing information. Whenever information on an executable object is registered in the task list 1010, an executable object pointing object 402 may be generated. According to another embodiment of the present invention, the executable object pointing object 402 is generated whenever each task is registered, and only pointing information about an executable object corresponding to the task is added whenever information on the executable object is registered. If the executable object is updated, the executable pointing object 402 may store pointing information of all of the update versions of the executable object. The pointing object management process 2000 includes an executable instance pointing information management process 2004 for generating and managing a point object for an executable instance pointing object 404 for pointing an executable instance generated by customizing the executable object. The processes 2002 and 2004 are substantially the same except that the former is for executable objects and the latter is for executable instances. All the explanations on the executable object pointing information management process 2002 can be applied to the executable instance pointing information management process 2004.

Referring back to Fig. 2, the method for controlling execution of the computing system 100 of the present invention further includes a task sequence management process 3000 for understanding user requests by analyzing one or more user commands received from the user through various paths, selecting tasks corresponding to the user requests, constructing an execution sequence of the selected tasks, and designating executable objects corresponding to the selected tasks. The task sequence management process 3000 includes: a user command analysis process 3002 for analyzing the user command received from the user; a user request understanding process 3004 for understanding the user's request contained in the analyzed user command; a task sequence building process 3006 for selecting one or more tasks to satisfy the understood user's request, and constructing the task sequence of the tasks; and an executable object designation process 3008 for designating an executable object to be executed to perform each of the tasks.

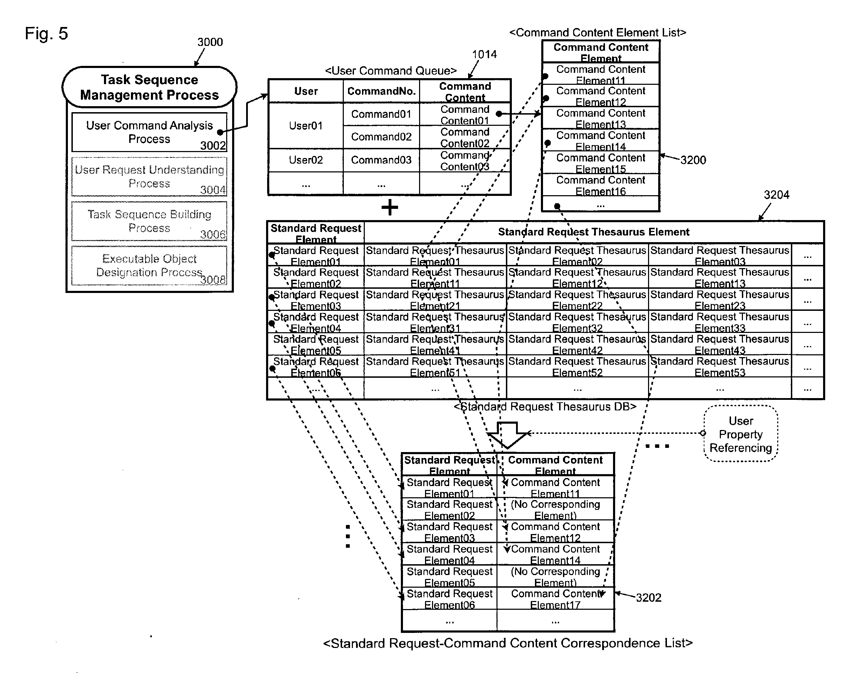

The task sequence management process 3000 will be described in detail with reference to Fig. 5. Fig. 5 is a schematic diagram showing a user command analysis process in the task sequence management process performed by the method for controlling execution of the computing system according to an embodiment of the present invention. As shown in Fig. 5, the user command analysis process 3002 extracts command content elements as semantic elements by analyzing the content of the user command, and construct a command content element list 3200 including the extracted command content elements. For example, command 01 of user 01 of the user command queue 1014 includes three words as command content (command content 01). In this case, the first word, the second word and the third word are extracted as command content element 11, command content element 12 and command content element 13, respectively, and the extracted command content elements are sequentially recorded in the command content element list 3200. Each of the extracted command content elements is recorded in a standard request-command content correspondence list 3202 in association with one or more standard request elements. A general user request consists of one or more of the standard request elements.

According to of the present invention, the standard request elements are selected by the designer or the user among components of which a typical user command consists. The standard request elements may be input or beforehand or in real time during the analysis of the user command. In an example of the command 01, the first word (command content element 01) may be analyzed as an "instruction" that is a typical standard request element. The second word (command content element 02) and the third word (command content element 03) may be interpreted as "input data" and "output source," respectively (e.g., data that can be recognized as an URL address of a computer to which an output is provided) that are typical standard request elements different from the "instruction." Therefore, the command 01 may be interpreted to include one instruction, one piece of input data and one piece of output source information. According to another embodiment of the present invention, in the user command analysis process 3002, the user property referencing is added y referring to the user property list 1012, so that analysis of the user command more suitable for characteristics of each user is possible.

In order to more accurately and effectively analyze the user command, according to an embodiment of the present invention, a standard request thesaurus database 3204 in which, for each of the standard request elements, one or more standard request thesaurus elements are recorded may be constructed and managed. The standard request thesaurus element, such as a word or an instruction that has been practically used or is likely to be used as the standard request element, may be selected and input by the designer or the user beforehand, or may be input in real time during the analysis of the user command. The user command analysis object 602 performs processes such as input, addition or deletion of the standard request element and/or the standard request thesaurus element, and may provide a user interface so that a designer, a system manager and/or a user can perform input beforehand or in real-time, addition or deletion. Referring to the example shown in Fig. 5, the user command 01 of the user 01 has the command content 01, and, from the command content 01, command content elements included in the command content element list 3200 are extracted. Specifically, a standard request-command content correspondence list 3203 is constructed to include command content element 11 corresponding to standard request element 01, command content element 12 corresponding to standard request element 03, command content element 14 corresponding to standard request 04, and command content element 17 corresponding to standard request element 06 by referring to the standard request thesaurus database 3204. As shown, dotted line arrows indicate that each of the command content elements corresponds to a specific thesaurus element of the standard request thesaurus database 3204.

Meanwhile, those skilled in the art can easily understand that the standard request thesaurus database 3204 is not necessarily constructed in the computing system 100 of the present invention and a thesaurus database that has already been constructed in, e.g., an external server, may be used. Further, since the standard request elements or the standard request thesaurus elements can be input in real time, the standard request thesaurus database 3204 may not be necessarily used in the user command analysis process 3002. In this case (i.e., in the case of not using the standard request thesaurus database 3204), the user command analysis object 602 can determine to which standard request element each of the command content elements corresponds by internet search or the like, or provide a user interface with the user or the system manager to make determine it.

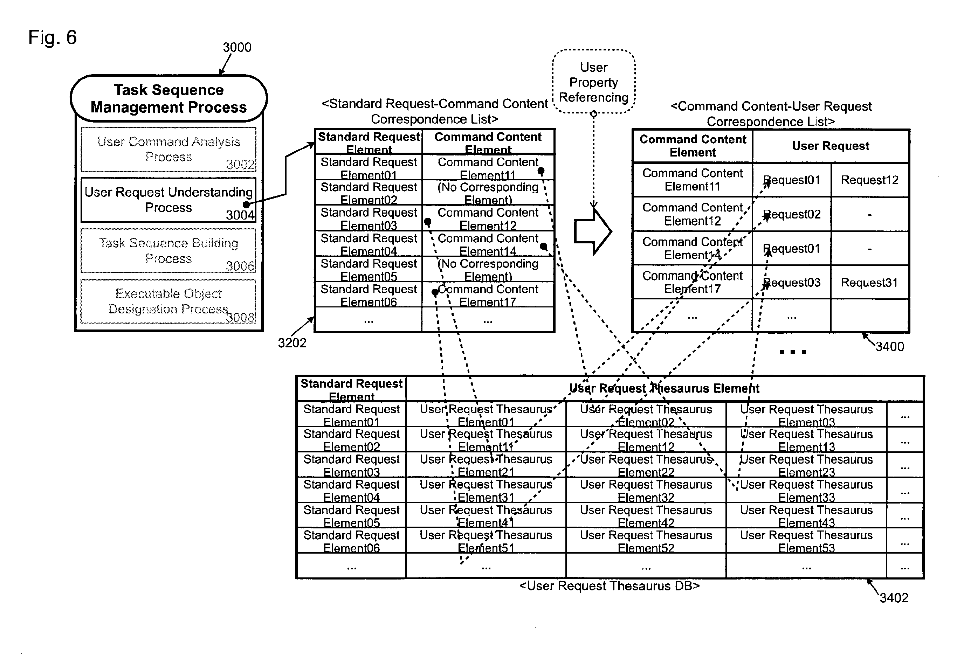

Fig. 6 is a schematic diagram showing a user request understanding process in the task sequence management process performed by the method for controlling execution of the computing system according to an embodiment of the present invention. The user request understanding process 3004 understand the user request contained in each of the command content elements of the standard request-command content correspondence list 3202, and constructs a command content-user request correspondence list 3400 in which the command content elements correspond to the user requests. At this time, in order to determine a user request corresponding to each of the command content elements, it is possible to refer to the user request thesaurus database 3402 in which one or more user request thesauruses (synonyms) are stored for each of the reference request elements. As described above, it is possible to select user requests more suitable for characteristics of the user by performing the user property referencing by referring to the user property list 1012.

Referring to the example shown in Fig. 6, command content element 11 corresponds to user request 01 and user request 02; command content request 12 corresponds to user request 02; command content element 14 corresponds to user request 01; and command content element 17 corresponds to user request 03 and user request 31. Dotted line arrows indicate that these correspondence relations are determined by referring to the user request thesaurus database 3402. The user request thesaurus database 3402 may be generated, added and deleted by the designer, the system manager or the user beforehand or in real time. Further, the user request thesaurus database 3402 may not be included in the computing system 100 of the present invention, and may be replaced by a thesaurus database of an external server or real-time designation or input by the user, the designer or the system manager.

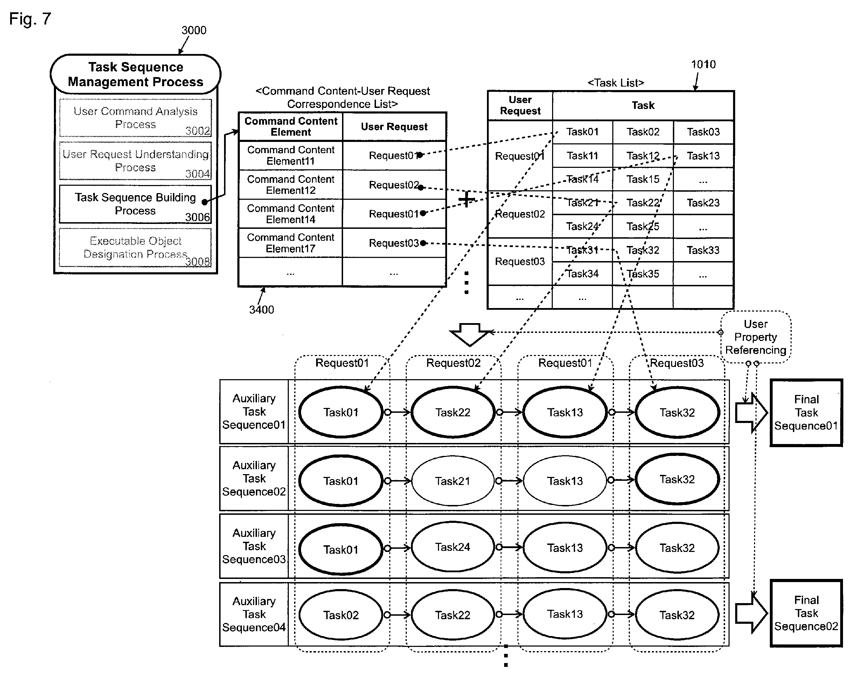

Fig. 7 is a schematic diagram showing a task sequence building process in the task sequence management process performed by the method for controlling execution of the computing system according to an embodiment of the present invention. As the user request contained in each of the command content elements are already understood, , in the task sequence building process 3006, one or more tasks corresponding to each of the understood user requests are selected by referring to the task list 1010 managed by the informative object 500, and a task sequence of the selected tasks is constructed by designating execution timing or order of the selected tasks. The execution timing or order of the selected tasks is determined based on the content of the understood user request. As shown, a plurality of task sequences may be constructed, and the user property referencing may be used to select a final task sequence among the auxiliary task sequences as similarly to the case of selecting the tasks. Also, a plurality of final task sequences may be selected.

The task list 1010 illustrated in Fig. 7 shows that user request 01 can be satisfied by task 01 and task 13; user request 02 can be satisfied by task 22, task 21 and task 24; and user request 03 can be satisfied by task 32. The tasks suitable for the user 01 may be selected by the user property referencing. The task sequences such as the illustrated auxiliary task sequences 01 to 04 can be constructed by listing logically possible combinations of the selected tasks in accordance the understood user requests and their order (e.g., in the order from the request 01, to the request 02, request 01 and request 03 as shown). By performing the user property referencing for the constructed auxiliary task sequences, the auxiliary task sequences 01 and 04 can be selected as final task sequences 01 and 02. As described above, according to another embodiment of the present invention, the task sequence which is stored in the task list 1010 to correspond to the specific user request may be read from the task list 1010 and selected as the final task sequence. Referring back to the example shown in Fig. 3, the task list 1010 includes a task sequence j having the tasks 02 and 07 corresponding to the request i. When it is determined that the user request understood by analyzing the input user command is the same as the request i or include the request i, the task sequence j is read and the tasks 02 and 07 are selected.

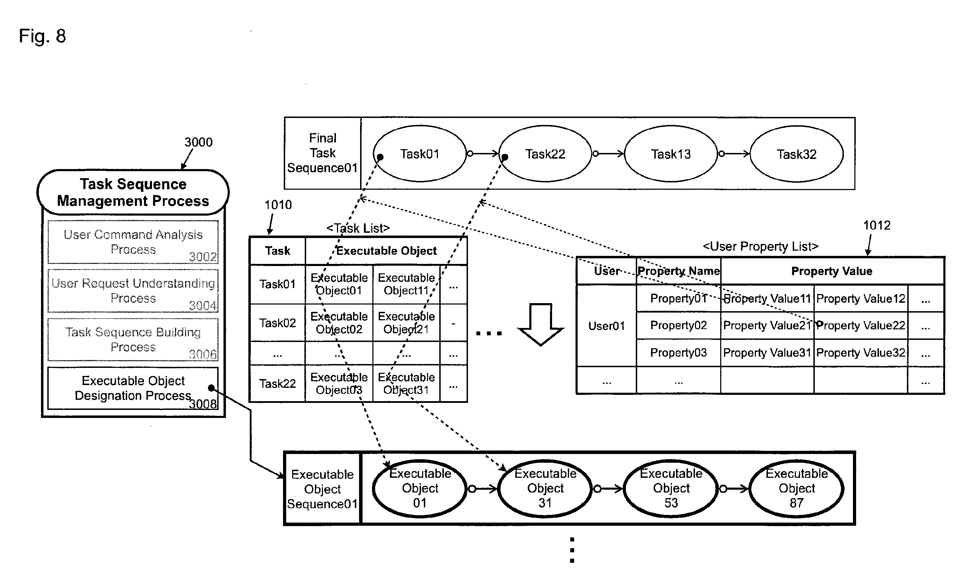

Fig. 8 is a schematic diagram showing an executable object designation process in the task sequence management process performed by the method for controlling execution of the computing system according to an embodiment of the present invention. As described above, the executable object designation process 3008 designates executable objects capable of executing the tasks in the final task sequence constructed by the task sequence building process 3006 by referring to the task list 1010 managed by the informative object 500, and constructs an executable object sequence for designating execution timing or execution order of the designated executable objects. For example, in case any executable object corresponding to the task does not exist in the task list, or, even if an executable object corresponding to the task exists in the task list, it is unclear whether or not the executable object is invalid or it is preferable to check whether or not more suitable executable objects exist, it is possible to search and designate executable objects in the external server or the like. Further, when a plurality of executable objects correspond to each of the task, it is possible to designate an executable object more suitable for the user by performing the user property referencing by referring to the user property list 1012, as shown.

Referring to the example shown in Fig. 8, in final task sequence 01 selected by the task sequence building process 3006, tasks 01, 22, 13 and 32 are designated to be executed sequentially. Then, in the executable object designation process 3008, the task list 1010 is referred to specify executable objects corresponding to the tasks 01, 22, 13 and 32. According to the task list 1010 shown in Fig. 8, executable objects 01 and 11 correspond to the task 01, and executable objects 03 and 31 correspond to the task 22. Since the tasks corresponding to a plurality of executable objects exist, the user property referencing is performed by referring to the user property list 1012 in order to designate executable objects to be executed for the tasks. As a result, executable object 01 is designated for the task 01 by applying user property value 11, and executable object 31 is designated for the task 22 by applying user property value 22 (similarly, executable object 53 is designated for the task 13, and executable object 87 is designated for the task 32). The correspondence relations between the tasks and the executable objects are indicated by dotted line arrows starting from filled circles, and the user property values applied to the correspondence relations are indicated by dotted line arrows starting from empty circles.

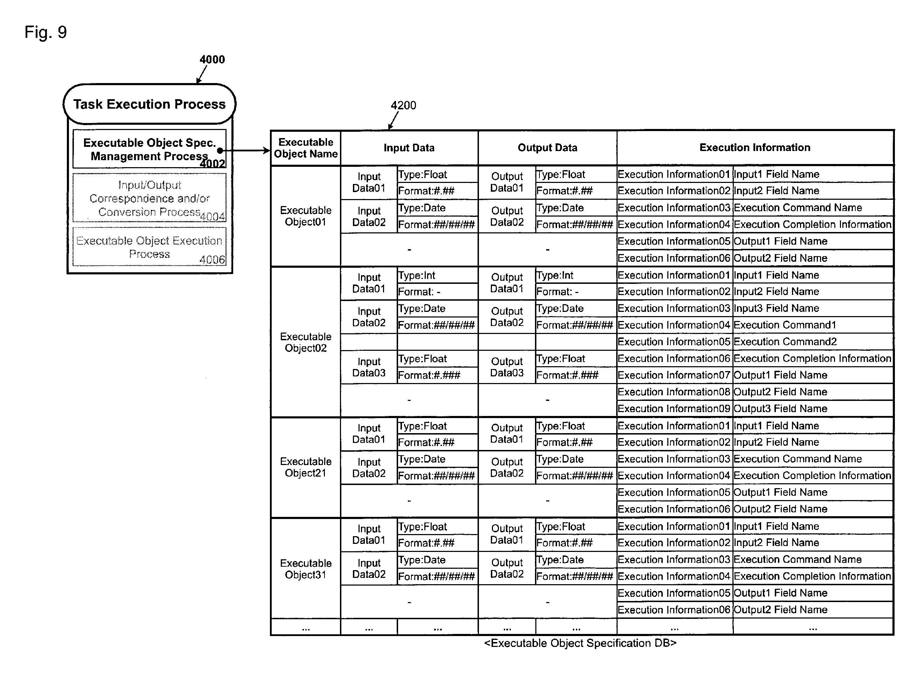

Referring back to Fig. 2, the method for controlling execution of the computing system 100 of the present invention further includes a task execution process 4000 for executing the selected executable objects or the executable instances sequentially or in parallel in accordance with the execution sequence managed by the procedural object 600, and providing the output to the designated recipient. As illustrated, the task execution process 4000 includes: an executable object specification management process 4002 for constructing and managing specification database of each of the executable objects (or the executable instances, hereinafter the same) included in the execution sequence; an input/output correspondence and/or conversion process 4004 for converting inputs and/or outputs of the executable objects so as to correspond to each other; and an executable object execution process 4006 for controlling execution of the executable objects to execute the unique operations of the executable objects. Hereinafter, the sub-processes 4002, 4004 and 4006 of the task execution process 4000 will be described in detail with reference to Figs. 9 to 11.

Fig. 9 is a schematic diagram showing an executable object specification management process in the task execution process performed by the method for controlling execution of the computing system according to the embodiment of the present invention. As illustrated, the executable object specification management process 4002 constructs and manages an executable object specification database 4200 in which specification information of the executable objects designated to be included in the execution sequence is recorded. The specification information of the executable objects recorded in the executable object specification database 4200 may include the number of input data of, the type and the format of each input data, the number of output data, the type and the format of each output data, execution information required for the execution of unique operations of each of the executable objects, or the like. The execution information may include a field name of the input data, an execution command name, execution completion information, an output field name, or the like. The specification information of the executable objects may be input, added and/or deleted hereinafter and/or in real time by the designer, the system manger and/or the user of the computing system 100. In this case, the executable object specification management object 702 can provide a user interface required to perform these processes. Moreover, according to another embodiment of the present invention, the executable object specification management object 702 collects and classifies specification information regularly or irregularly by internet search or the like, and then records and/or renews the collected information in the executable object specification database 4200.

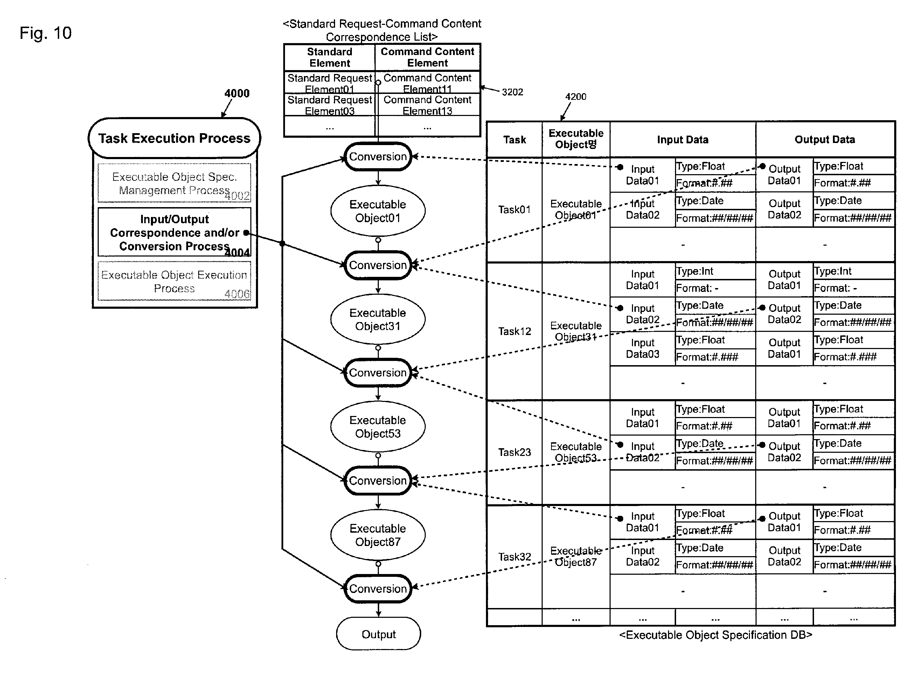

Fig. 10 is a schematic diagram showing an executable object input/output correspondence and/or conversion process in the task execution process performed by the method for controlling execution of the computing system according to the embodiment of the present invention. The input/output correspondence and/or conversion process 4004 converts the data extracted from the user command or the output data of an executable object that has been executed previously so as to match the number, the type and the format suitable for an executable object to be executed next by referring to the executable object specification data 4200 and then provides the converted data as an input(s) of the next executable object.

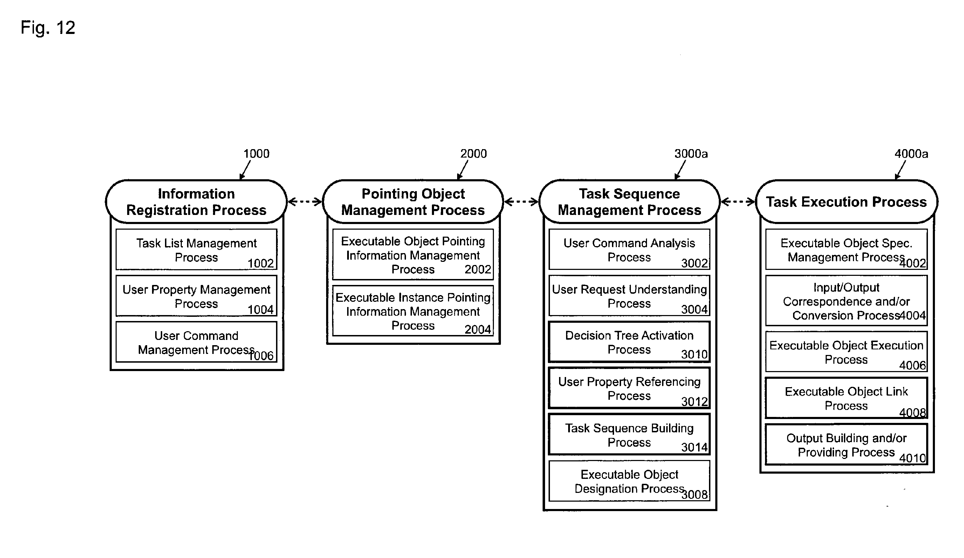

Referring to the example shown in the figure, an input data required to execute the executable object 01 to be executed first is acquired from the command content element 11 extracted by analyzing the user command by referring to the standard request-command content correspondence list 3202. Next, the value of the command content element 11 is converted so as to match the type and the format required by input data 01 of the executable object 01 to be executed first by referring to the executable object specification database 4200. The executable object 01 requires second input data 02 and, thus, conversion for this is also performed. Then, two output data 01 and 02 acquired as a result of the execution of a unique operation of the first executable object 01 are converted so as to be provided as the input of the executable object 31 to be executed secondly by referring to the executable object specification database 4200. At this time, the second executable object 31 requires three input data. Therefore, processes such as converting the output of the first executable object 01 into three inputs, or acquiring information to be used as a third input data 03 from the content element of the user command are performed. The output data of the final executable object 87 which has been output through the above processes may be converted to have the type that can be provided to the designated recipient, if necessary. The conversion of the output data of the final executable object 87 may be performed by the input/output correspondence and/or conversion process 4004, or may be performed by an additional output building and/or providing process 4010 as will be described in another embodiment of the present invention later. The additional output building and/or providing process 4010 is more effective when outputs of a plurality of executable objects need to be combined. The detailed description thereof will be provided below with reference to Fig. 12.

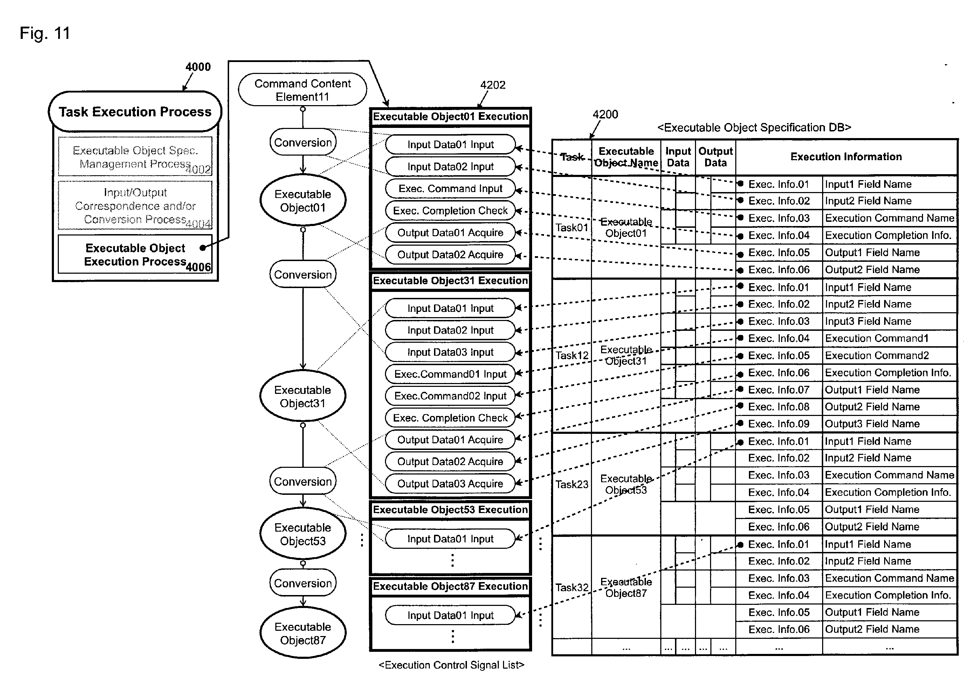

Fig. 11 is a schematic diagram showing an executable object execution process in the task execution process performed by the method for controlling execution of the computing system according to the embodiment of the present invention. As illustrated, in the executable object execution process 4006, execution of each of the designated executable objects is controlled by generating execution control information 4202 necessary to execute the designated executable objects in accordance with the execution sequence. The execution control information 4202 includes the number of inputs to be provided to the executable objects to be executed now, the name of input field in which each of the inputs is input, the number of the unique operations of the executable objects, and information on an execution command for executing each of the operations and the type of the execution command. The execution control information 4202 is provided to the executable objects sequentially or in parallel so that the unique operations of the executable objects can be executed.

Referring to the example shown in the figure, when two input data 01 and 02 from the command content element 11 are converted by the input/output correspondence and/or conversion process 4004, the first executable object 01 inputs the converted input data 01 and 02 to the field of input 1 and the field of input 2. Then, an execution command for executing the unique operation of the executable object 01 is generated and provided to the executable object 01. The field names of the input 1 and the input 2 of the executable object 01 and the execution command correspond to execution information 01, 02 and 03 of the executable object specification database 4200, respectively. Next, it is monitored whether or not the execution of the unique operation of the executable object 01 has been completed (i.e., whether or not execution completion information corresponding to execution information 04 has been acquired) by referring to the execution completion information corresponding to the execution information 04 of the executable object specification database 4200. The execution completion information may be the same as one of the outputs of the executable object 01 or may be different from the outputs according to the types of the executable objects. When it is determined that the execution of the unique operation of the executable object 01 has been completed, the output data which is the result of the execution of the operation is acquired.

In the example shown in the figure, the two output data 01 and 02 can be acquired from the field of the output 1 and the field of the output 2. The type and the format of the output data of the first executable object 01 are converted so as to be used as an input data of the next executable object 31 by the input/output correspondence and conversion process 4004. When the conversion between the output and the input is completed, the above execution processes are performed for the executable object 31. In the example shown in the figure, execution information 01 to 03 can refer to the field names of inputs 1 to 3 e, execution information 04 and 05 can refer to the information on two execution commands 1 and 2, and execution information 07 to 09 can refer to the field names of output 1 to 3 for the executable object 31. When the execution of all the executable objects are completed by the above processes, the result thereof is provided to the designated recipient.

Hereinafter, a method for controlling execution of a computing system will be described according to of the present invention with reference to Figs, 12 to 17. Fig. 12 is a schematic diagram showing processes executed by a method for controlling execution of a computing system according to another embodiment of the present invention. As shown, the method for controlling execution of the computing system according to another embodiment of the present invention includes a modified task sequence management process 3000a, which further includes a decision tree activation process 3010 than the task sequence management process 3000. The modified task sequence management process 3000a further includes a user property referencing process 3012 for supplementing the decision tree activation process 3010 and a modified task sequence building process 3014 executed based on the sub-processes 3010 and 3012. Moreover, the method for controlling execution of the computing system according to another embodiment of the present invention includes a modified execution process 4000a, which further includes an executable object link process 4008 and an output building and/or providing process 4010 than the task execution process 4000. The sub-processes other than newly added or modified sub-processes are the same as those described in the above embodiments and thus are indicated by the same reference numerals. Hereinafter, the newly added or modified sub-processes will be described with reference to Figs. 13 to 17.

Fig. 13 is a schematic diagram showing a decision tree activation process in the task sequence management process performed by the method for controlling execution of the computing system according to another embodiment of the present invention. As shown, when the user requests are identified by the user request understanding process 3004, a task for satisfying each of the user requests is selected, and a task sequence for designating the execution sequence or timing of the selected tasks should be constructed. At this time, if a plurality of tasks correspond to a single user request, decision tree database can be constructed to construct task sequences, each of which includes logically combinable tasks, by arranging the tasks in a tree structure in the order of the user requests.

Referring to the example shown in the figure, first, tasks 01 and 02 are arranged as a first step task candidate group corresponding to the first user request 01 of the command content-user request correspondence list 3400 by referring to the task list 1010. Next, tasks 21 to 24 are arranged as a second step task candidate group corresponding to the second user request 02. At this time, the output of the task 01 can be provided as the inputs of tasks 21, 22 and 24, and the output of the task 02 can be provided as the inputs of tasks 23 and 24, which are indicated by solid line arrows starting from empty circles. Therefore, a task sequence extending from the task 01 to the task 23 cannot be constructed, and a task sequence extending from the task 02 to the task 21 or 22 cannot be constructed. The task decision tree database 3010 is constructed by arranging all the tasks corresponding to the third and the fourth task candidate groups, and the input/output correspondence relations between the arranged tasks are indicated by solid line arrows starting from empty circles, A plurality of auxiliary task sequences that can be logically combined may be constructed by the task decision tree database 3010, and one or more auxiliary task sequences may be selected as the final task sequence. As described above, it may be preferable to construct all the auxiliary task sequences that can be logically combined as described above. However, it may be preferable to construct one or more auxiliary task sequences including only tasks that are likely to be preferred by reflecting user properties and select the most proper task sequence as the final task sequence. To this end, the user property referencing can be performed by referring to the user property list 1012.

The user property referencing will be described in detail with reference to Fig. 14. Fig. 14 is a schematic diagram showing a user property referencing process in the task sequence management process performed by the method for controlling execution of the computing system according to another embodiment of the present invention. As described above, the user property referencing is a method for producing a result suitable for unique properties of the user by referring to the user property list 1012 in which the user property information and the weights of the properties are recorded in performing processes such as the analysis of the user request, the selection of the execution task corresponding to the analyzed request, the designation of the executable object suitable for the execution of the selected task, the construction of the execution sequence, or the like. An example in which the user property referencing is applied to the decision tree activation process 3010 is shown in Fig. 14. Referring to the example, in the case of the first step task candidate group, the task 01 is determined to be proper based on property value 11 corresponding to property 01 among various properties of the user 01 (which is marked by the thickest lined circle). On the other hand, when applying property value 12, the task 02 is determined to be proper instead of the task 01 (which is marked by the medium-thickness lined circle.) Similarly, in the case of the second step task candidate group, the task 22 is determined to be proper based on property value 21 corresponding to property 02, and the task 24 is determined to be proper based on property value 22. In the case of the third task candidate group, the task 13 and the task 15 are determined to be proper based on property values 31 and 32 corresponding to the property 03, respectively. In the case of the fourth step task group, the task 32 is determined to have the highest suitability and the task 33 is determined to have the second highest suitability based on the property value 41 corresponding to the property 04. As described above, the priority of various options may be determined based on a single property value.

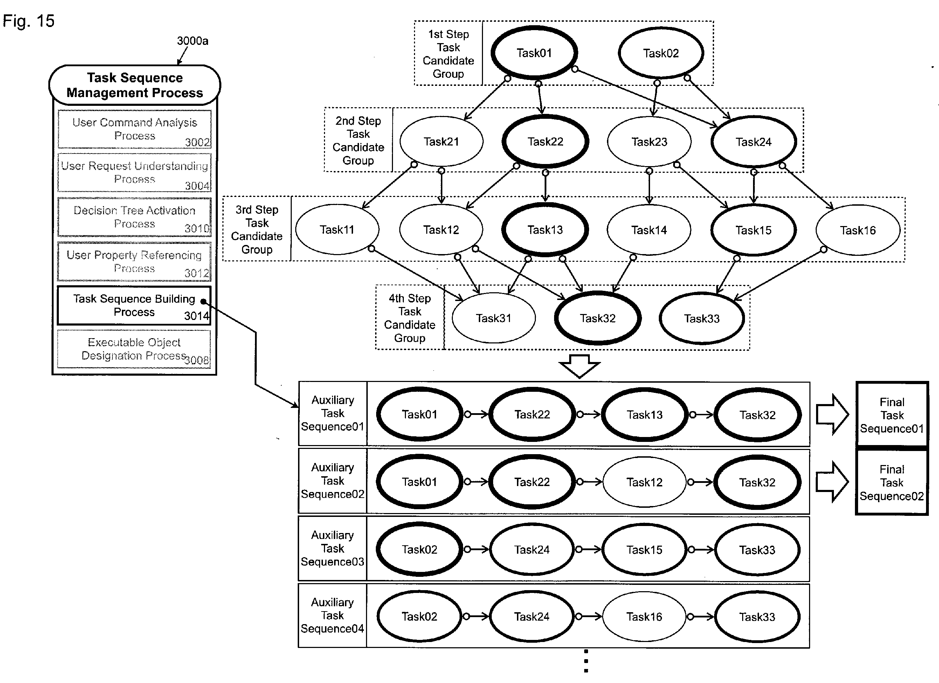

Hereinafter, the modified task sequence building process 3014 for determining the task sequence of the tasks combined by the task decision tree activation process 3010 and the user property referencing process 3012 will be described in detail with reference to Fig. 15. Fig. 15 is a schematic diagram showing a task sequence building process in the task sequence management process performed by the method for controlling execution of the computing system according to another embodiment of the present invention. As shown, the task sequence building process 3014 construct auxiliary task sequences by selecting combinations that may contain a largest number of tasks that have been determined to be suitable for the user by the user property referencing 3012 among the combinations of the tasks arranged by the task decision tree activation process 3010. Further, one or more task sequences are selected in descending order of suitability among the constructed auxiliary task sequences by referring to the property values of the user property list 1012 or the like.

Referring to the shown example, among the tasks (i.e., tasks 21, 22 and 24) in the second step task candidate group that can receive as their inputs the output of the task 01 in the first step task candidate group, the task 22 is determined to be suitable for the user by the user property referencing 3012. Similarly, among the tasks (i.e., tasks 12 and 13) in the third step task candidate group that can receive as their inputs the output of the task 22, the task 13 is determined to be suitable for the user by the user property referencing 3012. Among the tasks in the fourth step candidate group, the task 32 is determined to be suitable. The sequence of such tasks becomes a first auxiliary task sequence 01 shown in the lower part of Fig. 15. A second auxiliary task sequence 02 is the only sequence that can be combined with tasks that are not determined to be suitable by the user property referencing among the third step task candidate group but determined to be suitable among other step task candidate groups. Similarly, two auxiliary task sequences 03 and 04 can be acquired by combining the tasks that can receive as the inputs thereof the output of the task 02 in the first step task candidate group. Among the four auxiliary sequences 01 to 04, the two auxiliary task sequences 01 and 02 having the highest suitability are selected as the final task sequence.

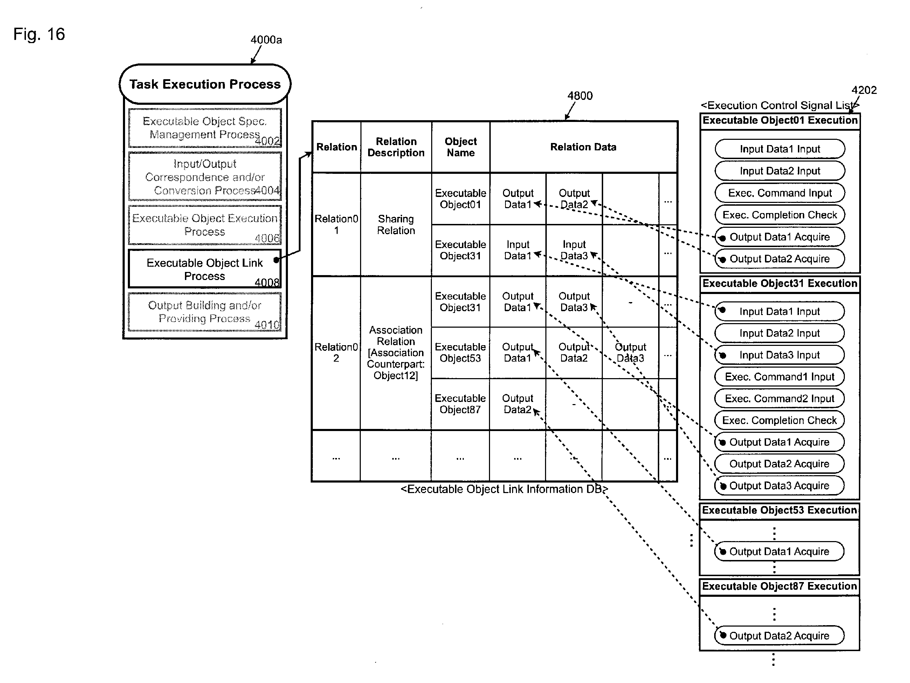

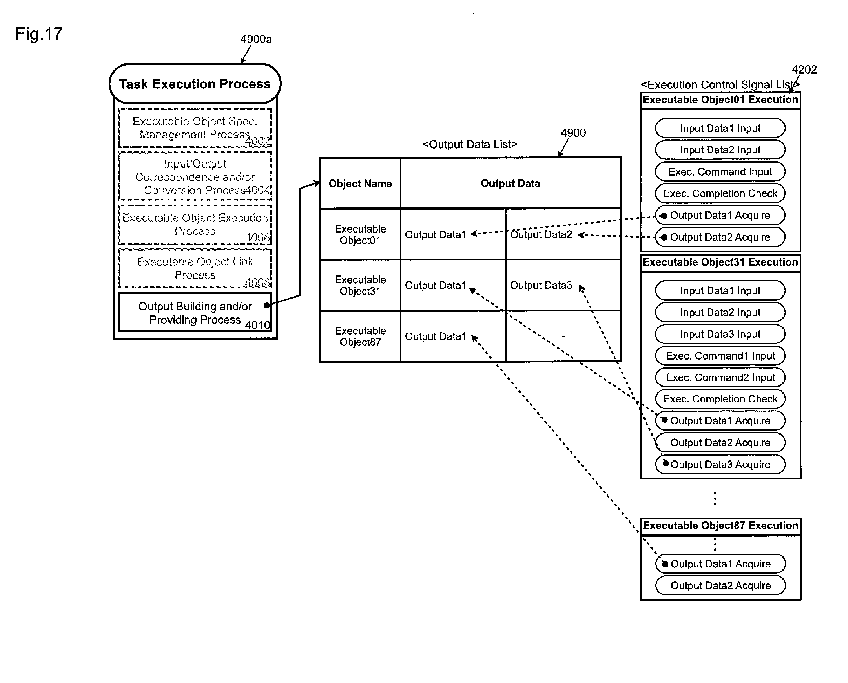

Next, the executable object link process 4008 and the output building and/or providing process 4010 will be described in detail with reference to Figs. 16 and 17. Fig. 16 is a schematic diagram showing an executable object link process in the task execution process performed by the method for controlling execution of the computing system according to another embodiment of the present invention. As shown, in the executable object link process 4008 constructs and manages executable object link information database 4800 in which the link information between the executable objects is recorded. The executable object link information may include sharing relation information about data shared by a plurality of executable objects, causal relation information indicating that a specific input and output serve as cause and effect, association relation information indicating that input and/or output data processed by a plurality of executable objects relate to specific events, specific objects or the like.

In the example shown in the figure, referring to relation 01 which is the first relation information of the executable object link information database 4800, the output data 1 and 2 of the executable object 01 are shared as the input data 1 and 3 of the executable object 31 (or vice versa). Therefore, it is unnecessary to store such data redundantly. Accordingly, storage space such as a memory can be effectively utilized. Further, when any one of the executable objects 01 and 31 is executed and then the other executable object is executed after a predetermined period of time passes, data produced from this process is stored in a cache or the like and, thus, the execution speed can be improved. Moreover, referring to relation 02 which is the second relation information of the executable object link information database 4800, three executable objects 31, 53 and 87 are associated with the object 12 and the object 12 is an association counterpart of the executable objects 31, 53 and 87. The output data 1 and 3 of the executable object 31 are recorded as relation data; the output data 1 to 3 of the executable object 53 are recorded as relation data; and the output data 2 the executable object 87 is recorded as relation data. By referring to the association relations between a plurality of executable objects and a specific object (or a specific event), when processing related to the specific object or the specific event is carried out, it can be effectively controlled which data of which executable object needs to be prepared or processed. Further, the post management for checking or renewing such processes can be more effectively and precisely performed.

Fig. 17 is a schematic diagram showing an output building and/or providing process in the task execution process performed by the method for controlling execution of the computing system according to another embodiment of the present invention. When the execution of the unique operations of the executable objects of the execution sequence is completed, the output building and/or providing process 4010 combines one or more outputs and provides the combined output to the designated recipient. In other words, in the input/output correspondence and/or conversion process 4004, when the execution of the executable objects is completed, the outputs thereof are sequentially provided to the designated recipient (S) However, when it is necessary or preferable to combine a plurality of outputs and provide the combined output to the designated recipient, the output data list 4900 is constructed by collecting outputs to be combined by the output building and/or providing process 4010, and the combined output having suitable type and format is provided to the designated recipient. Referring to the example shown in the figure, the output data list 4900 is constructed by combining the output data 1 and 2 of the executable object 01, the output data 1 and 3 of the executable object 31, and the output data 1 of the executable object 87. The outputs collected in the output data list 4900 may be combined into an output(s) of the number, the type and the format suitable to the designated recipient and then provided to the designed recipient.

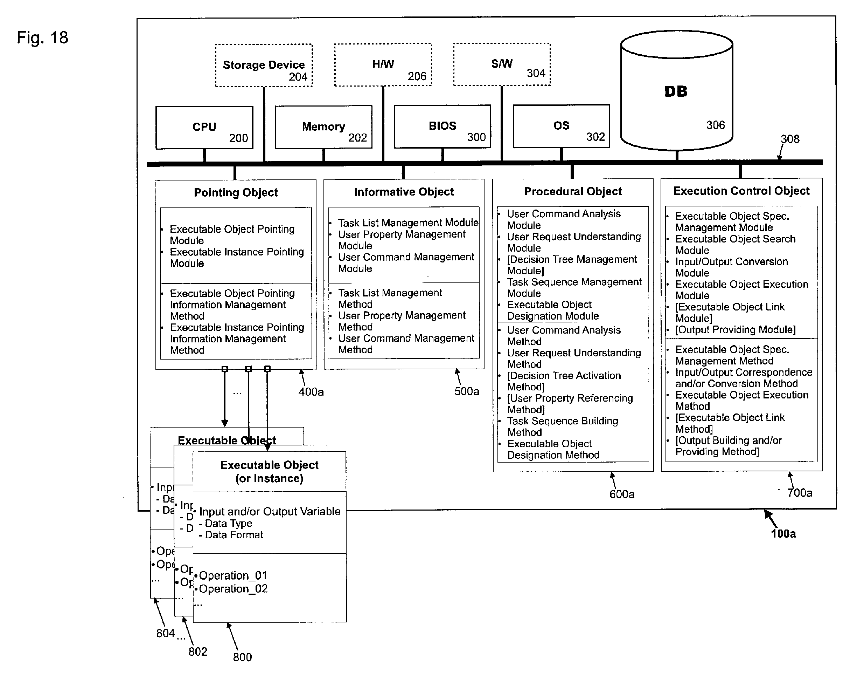

Hereinafter, still another embodiment of the present invention will be described with reference to Fig. 18. Fig. 18 is a schematic diagram showing the structure of a computing system according to another embodiment of the present invention. As shown, in a computing system 100a according to still another embodiment of the present invention, the objects included in the objects 400 to 700 of the computing system 100 according to the embodiment shown in Fig. 1 are implemented as modules of objects 400a to 700a. Further, the processes described in Figs. 2 to 17 are implemented as Methods of the corresponding objects. For example, the pointing object 400a of the computing system 100a according to still another embodiment of the present invention includes: an executable object pointing module for constructing and managing pointing information for indicating a part or all of the executable objects 800, 802 and 804; and an executable instance pointing module for constructing and managing pointing information for pointing executable instances of a part or all of the executable objects 800, 802 and 804. Moreover, the pointing object 400a further includes: an executable object pointing information management method corresponding to the executable object pointing information management process 2002 for constructing and managing pointing information on the executable objects; and an executable instance pointing information management method corresponding to the executable instance pointing information management process 2004 for constructing and managing pointing information on the executable instances. Each of the modules of the pointing object 400a includes various variables and constants for execution of a corresponding method, and the method performs the above processes by using the variables and constants of the module.

The correspondence relations between the modules and the methods of other objects 500a to 700a of the computing system 100a of Fig. 18 and the processes shown in Fig. 13 and the objects 500 to 700 of the computing system 100 of Fig. 1 are the same as that described above. From the above explanations, those who skilled in the art can clearly understand that the functional structure of the objects for implementing the technical idea of the present invention can be designed in various ways according to the features of object oriented programming and thus the technical scope of the present invention is not limited by the scope of the functional structure of the objects.

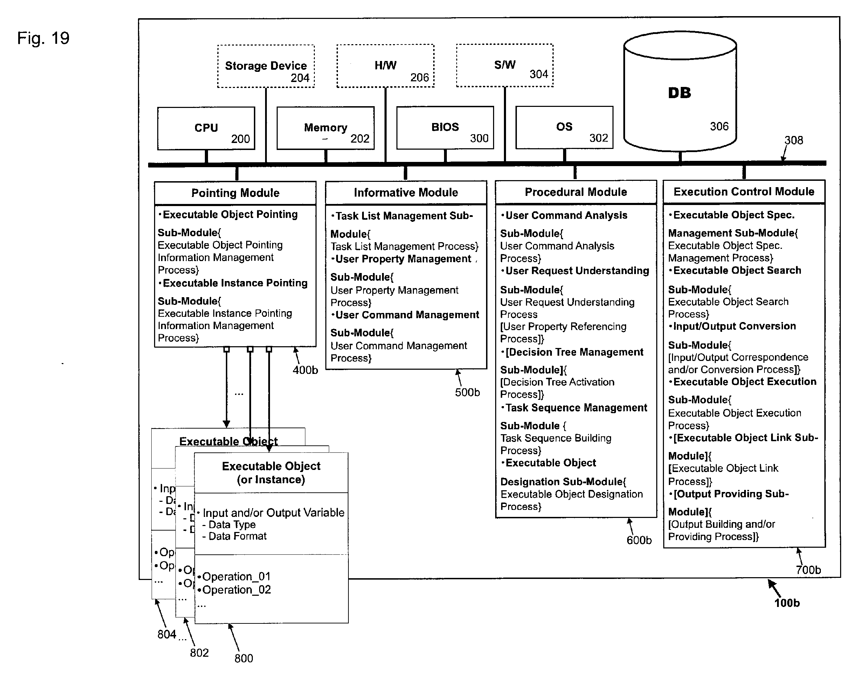

Hereinafter, still another embodiment of the present invention will be described in detail with reference to Fig. 19. Fig. 19 is a schematic diagram showing the structure of a computing system according to still another embodiment of the present invention. As illustrated, a computing system 100b according to still another embodiment of the present invention is obtained by implementing the computing system 100a according to tile embodiment shown in Fig. 18 by the procedural programming instead of the object oriented programming. As illustrated, the objects 400a, 500a, 600a and 700a shown in Fig. 18 are implemented as modules 400b, 500b, 600b to 700b by the procedural programming, respectively. Each of the modules includes sub-modules for executing the processes shown in Fig. 2. For example, the pointing object 400a shown in Fig. 18 is implemented as the pointing module 400b, and the pointing module 400b includes: an executable object pointing sub module for constructing and managing pointing information on the executable objects; and an executable instance pointing sub module for constructing and managing pointing information on the executable instances. The specific technical idea of the sub modules is the same that described with regard to Fig. 3, so that detailed description thereof will be omitted. Further, this is also applied to other modules 500b to 700b. From the above description, those who skilled in the art can clearly understand that the technical scope of the present invention is not limited by computer programming languages, programming techniques, or programming paradigms for executing the technical idea of the present invention.

The present invention is not limited to the above-described embodiments and may be variously modified without departing from the scope of the present invention. Further, the functions executed in the above embodiments may be combined as properly as possible. The above embodiments include inventions of different stages and, therefore, various inventions can be extracted by properly combining a plurality of structural requirements disclosed in the above embodiments. For example, even if some elements are removed from all of the elements disclosed in the above embodiments, the resulting configuration can be extracted as an invention, provided that an effect equivalent to that of the present invention can be obtained.

## Claims

1. A computing system, comprising a hardware which comprises a central processing unit and a memory and a software which comprises a basic input/output system and an operation system, for executing one or more of processes for performing a task required by a user, comprising:
a pointing object for constructing and managing pointing information, wherein said pointing information points one or more of executable objects, each of which provides a unique output by performing a unique operation;
an informative object for constructing and managing reference information, wherein said reference information serves as a reference in using one or more of executable objects to deal with a request of said user;
a procedural object for selecting one or more of said executable objects to be executed based on said reference information, and constructing and managing an execution sequence related to execution order of said selected one or more of said executable objects; and
an execution control object for executing at least a part of each of said selected executable object according to said execution sequence and providing output of said executable objects produced as a result of said execution to a designated recipient selected from a group comprised of said user and at least one third party selected by analyzing said user's request.

2. The computing system of claim 1, wherein said pointing object comprises:
an executable object pointing object for constructing and managing pointing information for pointing at least a part of said executable object; and
an executable instance pointing object for constructing and managing pointing information for pointing at least a part of executable instances of said executable object.

3. The computing system of claim 1, wherein said reference information constructed and managed by said informative object comprises:
a task list comprising one or more of tasks, wherein each of said tasks corresponds to a job for satisfying said user's request which is expected to be requested by said user;
a user property list in which property information of each user and weight information on at least a part of said properties are recorded in correspondence with each other for each of said users;
a user command information in which one or more of user commands selected from a group consisting of one or more of commands and messages received from said user are stored for each of said users,
wherein said informative object comprises:
a task list management object for constructing and managing said task list;
a user property management object for constructing and managing said user property list; and
a user command management object for constructing and managing a user command queue in responsive to receiving said user command information from said user.

4. The computing system of claim 1, wherein said procedural object comprises:
a user command analysis object for constructing and managing a standard request thesaurus database in which one or more of standard request thesauruses are stored in correspondence with one or more of standard request elements of said user's request, extracting at least one command content element which is a semantic element thereof from said user command, and analyzing said user command by classifying said command content element in correspondence with said standard request element, said command content element being extracted by referring to said standard request thesaurus database;
a user request understanding object for constructing and managing a user request thesaurus database in which one or more of user request thesauruses are stored in correspondence with said standard request elements, and understanding said user's request in said analyzed user command by referring to said user request thesaurus database and by acquiring one or more of user requests corresponding to said extracted command content elements;
a task sequence management object for selecting one or more of tasks to be executed to satisfy said understood user request by referring to reference information managed by said informative object, and constructing and managing a task sequence for specifying execution order of said selected one or more of tasks; and
an executable object specifying object for constructing and managing an executable object sequence by referring to said reference information operated by said informative object and by specifying an executable object corresponding to at least one of said tasks in said task sequence constructed by said task sequence management object.

5. The computing system of claim 4, wherein said procedural object executes user property referencing for executing one or more of processes selected from a group consisting of:
analysis of said user's request suitable for at least one unique property of said user,
selection of at least one task,
selection of at least one executable object, and
construction and management of said execution sequence,
by referring to said user property list managed by said informative object.

6. The computing system of claim 4, wherein said procedural object further comprises:
a decision tree management object for constructing and managing a task decision tree database for constructing a task sequence in which a plurality of tasks is arranged in a tree structure and logically combined, in case there are a plurality of tasks corresponding to any one of said user requests.

7. The computing system of claim 4, wherein said executable object specifying object specifies one or more of executable objects required to execute said one or more of tasks by searching one or more of storage spaces selected from a group consisting of storage devices inside and outside of said computing system.

8. The computing system of claim 1, said execution control object comprises:
an executable object specification management object for constructing and managing an executable object specification database comprising one or more kinds of information, as information on said specification of said executable objects, selected from a group consisting of:
the number of input data,
type and format of said input data,
the number of output data,
type and format of said output data, and
execution information of each executable operation;
an input/output conversion object for converting information extracted from said user command by referring to said executable object specification database and one or more kinds of information selected from a group consisting of said outputs of said executable objects according to one or more of specifications selected from a group consisting of said number, said type and said format suitable for execution of another executable object; and
an executable object execution object, in order to execute said executable objects according to said execution sequence, for:
extracting information on the number of unique operations comprised in said executable objects to be executed and information on said execution command for executing each of said operations by referring to said executable object specification database,
generating control information suitable for said executable object based on said extracted information, and
controlling said executable object for said unique operation of said executable object to be excuted by providing said control information to said executable object.

9. The computing system of claim 8, wherein said execution control object further comprises an executable object link object for constructing and managing a database of information on correspondence among said executable objects.

10. The computing system of claim 8, wherein said execution control object further comprises an output providing object for combining said outputs of each of said unique operations upon completion of said execution of said unique operations of one or more of executable objects according to said execution sequence, and providing said combined output to said designated recipient.

11. The computing system of claim 1, wherein said execution control object executes one or more of customized instances of said selected executable object according to said execution sequence, and provides said execution result to said designated recipient.

12. A method for controlling execution of a computing system, said computing system comprising a hardware which comprises a central processing unit and a memory and a software which comprises a basic input/output system and an operation system, for executing one or more of processes for performing a task required by a user, comprising:
an information registration process for constructing and managing reference information, wherein said reference information serves as a reference in using one or more of executable objects to deal with a request of said user, each of said executable objects provides a unique output by performing a unique operation;
a pointing object management process for constructing and managing pointing information, wherein said pointing information points one or more of executable objects;
a task sequence management process for selecting one or more of said executable objects to be executed based on said reference information, and constructing and managing an execution sequence related to execution order of said selected one or more of said executable objects; and
a task execution process for executing at least a part of each of said selected executable object according to said execution sequence and providing output of said executable objects produced as a result of said execution to a designated recipient selected from a group comprised of said user and at least one third party selected by analyzing said user's request.

13. A recording medium for recording an execution control program of a computing system for performing one or more processes for executing a task required by a user, said computing system comprising a hardware which comprises a central processing unit and a memory and a software which comprises a basic input/output system and an operation system, wherein said execution control program controls said computing system to perform processes comprising:
an information registration process for constructing and managing reference information, wherein said reference information serves as a reference in using one or more of executable objects to deal with a request of said user, each of said executable objects provides a unique output by performing a unique operation;
a pointing object management process for constructing and managing pointing information, wherein said pointing information points one or more of executable objects;
a task sequence management process for selecting one or more of said executable objects to be executed based on said reference information, and constructing and managing an execution sequence related to execution order of said selected one or more of said executable objects; and
a task execution process for executing at least a part of each of said selected executable object according to said execution sequence and providing output of said executable objects produced as a result of said execution to a designated recipient selected from a group comprised of said user and at least one third party selected by analyzing said user's request.
